# EUROPÄISCHE PATENTANMELDUNG

(11) **EP 1 189 121 A2**
(43) Veröffentlichungstag der Anmeldung: **20.03.2002**
(21) Anmeldenummer: 01121295.8
(22) Anmeldetag: 05.09.2001
(51) Int. Cl.: G05B 19/404, G05B 19/401, B25J 9/16

(54) **Verfahren zur Kompensation von statischen Positionsfehlern und Orientierungsfehlern**

(30) Priorität: 18.09.2000 DE 10046092
(71) Anmelder: SIEMENS AKTIENGESELLSCHAFT, 80333 München (DE)
(72) Erfinder: Puchtler, Thomas, 91325 Adelsdorf (DE)

(57) **Zusammenfassung**

An einer Anzahl verschiedener Arbeitspunkte (P0...Px) im Arbeitsraum A einer Bearbeitungsmaschine wird zunächst ein vorhandener Positionier- und Orientierungsfehler ausgemessen. Die Sollstellungen (X_soll und O_soll) werden zusammen mit den zugeordneten Stellungsfehlern (rA, oA) in eine Kompensationstabelle (K) eingetragen. Bei der Erzeugung der Führungsgrößen aus Stellungsvorgaben werden diese Kompensationswerte eingerechnet. Dadurch verschwindet zunächst an den Messpunkten der Stellungsfehler. In den Zwischenräumen werden die Werte aus der Kompensationstabelle (K) interpoliert, wodurch auch dort die Abweichungen verringert werden.

## Beschreibung

Die Erfindung betrifft ein Verfahren zur Kompensation von statischen Positionsfehlern und Orientierungsfehlern bei der Bewegungsführung eines beweglichen Maschinenelementes einer industriellen Bearbeitungsmaschine wie einer numerisch gesteuerten Werkzeugmaschine, einem Roboter oder dergleichen, mit einer Sollwertvorgabe zur Erzeugung von Führungsgrößen für einen oder mehrere Antriebe zur Steuerung des Maschinenelementes in einem vorgegebenen Arbeitsraum.

Bei der Konstruktion von industriellen Bearbeitungsmaschinen kommt es unter anderem auf höchste Präzision bei der Positionierung von Maschinenelementen an, um die heutigen Anforderungen an die Genauigkeit von z.B. durch eine numerisch gesteuerte Werkzeugmaschine zu fertigenden Werkstücken zu gewährleisten.

Die absolute Positionier- und Orientierungsgenauigkeit von Werkzeugmaschinen und Robotern wird dabei unter anderem durch folgende Faktoren beeinträchtigt:
- durch Spindelsteigungsfehler bei Linearachsen mit Kugelgewindetrieben.
- aufgrund eines Durchhangs von Führungsschienen, z.B. bedingt durch das Gewicht des Werkzeugs und der Spindel einer Werkzeugmaschine.
- durch Verwindung und fehlende Geradheit von Führungsschienen.
- durch Winkligkeitsfehler zwischen den Führungsschienen.
- aufgrund unzugänglicher Information über tatsächliche, geometrische Dimensionen von Bauteilen. Oft wird dann anstelle der richtigen Informationen das Zeichnungsmaß verwendet.
- bei nicht kartesischen Werkzeugmaschinen und Robotern liegt der Koordinatentransformation der Steuerung häufig nur ein vereinfachtes, mathematisches Modell zugrunde, um die Rechenlaufzeit zu begrenzen und die Anzahl der geometrischen Parameter überschaubar zu halten.

Häufig wird nach der Inbetriebnahme einer Bearbeitungsmaschine mit Hilfe externer Messmittel die Positioniergenauigkeit und in seltenen Fällen auch die Orientierungsgenauigkeit im Arbeitsraum vermessen. Je nach Anwendungsfall sind diese aus den voranstehenden Gründen oft nicht ausreichend.

Für die Ursachen Spindelsteigungsfehler und Durchhang gibt es etablierte Methoden zur Kompensation. Der Verwindung und einem Winkligkeitsfehler begegnet man maschinenbautechnisch durch Vorgabe engerer Toleranzen. Dabei steigt jedoch der Aufwand mit der geforderten Genauigkeit exponentiell an und damit verbunden auch die Kosten für die entsprechende Bearbeitungsmaschine.

Die beiden letzten angeführten Fehlerquellen hingegen werden in der Regel hingenommen oder aber man versucht durch Verfeinerung des mathematischen Modells entgegen zu wirken, wodurch sich aber der softwaretechnische Realisierungs- und Rechenaufwand erhöht.

Aufgabe der vorliegenden Erfindung ist es daher, ein Verfahren der eingangs genannten Art zu schaffen, durch das unter anderem die voranstehenden Ursachen für Positionier- und Orientierungsungenauigkeiten und insbesondere die beiden zuletzt angeführten Fehlerquellen kompensiert werden.

Gemäß der vorliegenden Erfindung wird diese Aufgabe für vorhandene statische Positionierungenauigkeiten durch ein Verfahren zu deren Kompensation bei der Bewegungsführung eines beweglichen Maschinenelementes einer industriellen Bearbeitungsmaschine wie einer numerisch gesteuerten Werkzeugmaschine, einem Roboter oder dergleichen gelöst. Dabei dient eine Sollwertvorgabe zur Erzeugung von Führungsgrößen für einen oder mehrere Antriebe zur Steuerung des Maschinenelementes in einem vorgegebenen Arbeitsraum. Das Verfahren weist folgende Verfahrensschritte auf:
- Vorgabe von Sollpositionen für das Maschinenelement für eine vorgegebene Anzahl von verschiedenen Arbeitspunkten im Arbeitsraum,
- Ermittlung von Positionierfehlern durch Vergleichen von jeweiliger Sollposition und Istposition des Maschinenelementes für jeden dieser Arbeitspunkte,
- Hinterlegung von jeweiliger Sollposition und ermitteltem Positionierfehler in einer Kompensationstabelle,
- Berücksichtigung der Positionierfehler der Kompensationstabelle als Kompensationswerte durch
- deren Aufschaltung bei der Erzeugung von Führungsgrößen für den oder die Antriebe aus der Sollwertvorgabe in den jeweiligen Sollpositionen oder durch
- Interpolation der Kompensationswerte aus der Kompensationstabelle in den Zwischenräumen der jeweiligen Sollpositionen.

Für vorhandene statische Orientierungsungenauigkeiten wird die voranstehende Aufgabe durch ein Verfahren zu deren Kompensation bei der Bewegungsführung eines beweglichen Maschinenelementes einer industriellen Bearbeitungsmaschine wie einer numerisch gesteuerten Werkzeugmaschine, einem Roboter oder dergleichen gelöst. Dabei dient wiederum eine Sollwertvorgabe zur Erzeugung von Führungsgrößen für einen oder mehrere Antriebe zur Steuerung des Maschinenelementes in einem vorgegebenen Arbeitsraum. Das Verfahren weist folgende Verfahrensschritte auf:
- Vorgabe von Sollorientierungen für das Maschinenelement für eine vorgegebene Anzahl von verschiedenen Arbeitspunkten im Arbeitsraum,
- Ermittlung von Orientierungsfehlern durch Vergleichen von jeweiliger Sollorientierung und Istorientierung des Maschinenelementes für jeden dieser Arbeitspunkte,
- Hinterlegung von jeweiliger Sollorientierung und ermitteltem Orientierungsfehler in einer Kompensationstabelle,
- Berücksichtigung der Orientierungsfehler der Kompensationstabelle als Kompensationswerte durch
- deren Aufschaltung bei der Erzeugung von Führungsgrößen für den oder die Antriebe aus der Sollwertvorgabe in den jeweiligen Sollorientierungen oder durch
- Interpolation der Kompensationswerte aus der Kompensationstabelle in den Zwischenräumen der jeweiligen Sollorientierungen.

Zur Lösung der Aufgabe der Erfindung für sowohl statische Positionier- als auch Orientierungsungenauigkeiten wird ein Verfahren zur Kompensation vorgeschlagen, bei dem in der Kompensationstabelle die Sollstellungen mit zugeordneten Stellungsfehlern hinterlegt werden, welche die jeweiligen Sollpositionen und Sollorientierungen sowie die Positionsfehler und Orientierungsfehler beinhalten.

Nach einer vorteilhaften Ausgestaltung des Verfahrens gemäß der vorliegenden Erfindung hat es sich als günstig erwiesen, wenn der Arbeitsraum der Bearbeitungsmaschine quaderförmige Gestalt aufweist und zur Bestimmung von Arbeitspunkten in eine dreidimensionale Gitterstruktur aufgeteilt ist. Dabei wird für jeden Gitterpunkt oder eine Auswahl von Gitterpunkten die Abweichung zwischen der Sollstellung und der gemessenen Iststellung in ein Datenfeld der Kompensationstabelle eingespeichert.

Weiterhin vorteilhaft für die Umsetzung ist es dabei, wenn die Kompensationstabelle als Datenarray ausgeprägt ist.

Darüber hinaus hat es sich als günstig erwiesen, wenn für jeden Freiheitsgrad der Bearbeitungsmaschine der Verfahrbereich des Maschinenelementes äquidistant unterteilt wird. Es kann dann jede Dimension des Arbeitsraumes einfach durch den Minimalwert, den Maximalwert und die Anzahl der äquidistanten Intervalle beschrieben werden.

Besonders einfach und effektiv lässt sich das Verfahren automatisch bei der Inbetriebnahme der Bearbeitungsmaschine durchführen, indem über ein entsprechendes Teileprogramm mit Verfahranweisungen für die Sollwertvorgabe die gewünschten Stellungen im Arbeitsraum angefahren werden und nach Erreichen der jeweiligen Stellung die tatsächlichen Iststellungen gemessen und in die Steuerung der Maschine übertragen werden. Dort werden dann die Abweichungen in Form von Positionsfehlern und Orientierungsfehlern z.B. mit Hilfe des in eine numerische Steuerung integrierten Mikroprozessors ermittelt und mit den zugehörigen Stellungen in die Kompensationstabelle eingetragen.

Durch die voranstehend beschriebenen erfindungsgemäßen Verfahrensschritte ergeben sich unter anderem die folgenden Vorteile:
- eine Erhöhung der statischen Positionier- und Orientierungsgenauigkeit.
- eine geringere Anforderung an die Fertigungstoleranz der Bauteile, wodurch Kosteneinsparungen bei der Fertigung möglich sind.
- der Wegfall spezieller Messvorrichtungen zur Ermittlung der benötigten geometrischen Kenngrößen für das mathematische Modell zu einer numerischen Steuerung.
- eine mögliche Vereinfachung des mathematischen Modells, wodurch eine Laufzeitreduzierung in der Steuerung ermöglicht wird.
- das erfindungsgemäße Verfahren ist universell auf beliebige Bearbeitungsmaschinen wie z.B. Werkzeugmaschinen und Roboter anwendbar.

Weitere Vorteile und Details der Erfindung ergeben sich anhand des im folgenden dargestellten Ausführungsbeispiels und in Verbindung mit den Figuren. Dabei sind Elemente mit gleicher Funktionalität mit den gleichen Bezugszeichen gekennzeichnet. Es zeigt:
- FIG 1: einen quaderförmigen Arbeitsraum mit äquidistant unterteiltem Verfahrbereich,
- FIG 2: einen quaderförmigen Arbeitsraum für ein Maschinenelement mit dreidimensionaler Gitterstruktur,
- FIG 3: die Definition der räumlichen Abweichung und
- FIG 4: ein Beispiel einer Kompensationstabelle für Positionsfehler.

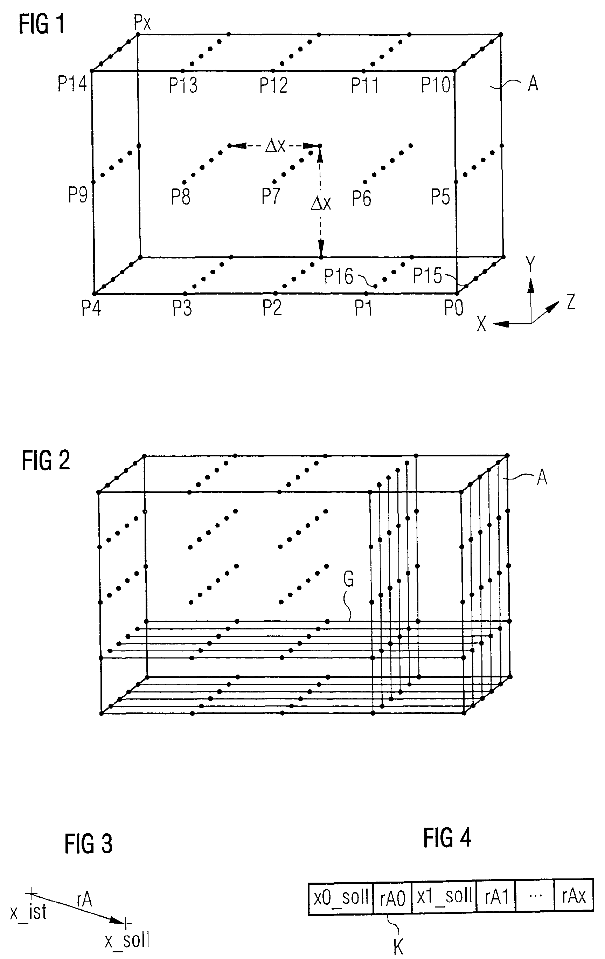

Die folgenden Ausführungen nehmen zunächst einmal auf einen Arbeitsraum A bezug, wie er beispielsweise in den Darstellungen nach FIG 1 und FIG 2 gezeigt ist. An einer Anzahl verschiedener Arbeitspunkte P0...Px im Arbeitsraum A einer Bearbeitungsmaschine wird zunächst ein vorhandener Positionierfehler und eventuell auch Orientierungsfehler ausgemessen. Im folgenden umfasst der Begriff "Stellung" in dieser Schrift die Position und die Orientierung.

Die Sollstellungen X_soll und O_soll werden zusammen mit den zugeordneten Stellungsfehlern rA, oA in eine Kompensationstabelle K eingetragen. Eine solche Kompensationstabelle K ist beispielhaft für Positionsfehler in der Darstellung nach FIG 4 gezeigt, indem in einer Liste stets der Positionssollwert X_soll und darauffolgend der zugehörige Kompensationswert rA abgelegt sind, und zwar für alle Arbeitspunkte P0...Px.

Bei der Erzeugung der Führungsgrößen für nicht gezeigte Antriebe aus Stellungsvorgaben werden diese Kompensationswerte eingerechnet, indem die entsprechenden Stellungssollwerte um die zugehörigen Kompensationswerte korrigiert als Führungsgrößen zur Steuerung der Antriebe ausgegeben werden. Dadurch verschwindet zunächst an den Messpunkten bzw. ausgewählten Arbeitspunkten P0...Px ein vorhandener Stellungsfehler.

Da aber die Mehrzahl der möglichen Arbeitspunkte im Arbeitsraum A in der Regel nicht zu diesen Messwerten zählt, die nur eine repräsentative Auswahl möglicher Stellungen im Arbeitsraum A darstellen, gilt es auch in diesen zwischen den Messpunkten liegenden Bereichen eventuell vorhandene Stellungsfehler zu kompensieren.

In diesen Zwischenräumen werden deshalb erfindungsgemäß die Kompensationswerte aus der Kompensationstabelle K interpoliert, wodurch auch dort die Abweichungen verringert werden.

Eine mögliche Vorgehensweise zur Durchführung des Verfahrens nach der Erfindung besteht darin, ein bei der Abnahme einer Werkzeugmaschine oder eines Roboters erstelltes Messprotokoll über die absolute Positionier- bzw. Orientierungsgenauigkeit in geeigneter Form als Kompensationstabelle K (vgl. FIG 4) in der numerischen Steuerung zu hinterlegen. Diese kann dann auf die vorangehend beschriebene Weise zur Steigerung der Genauigkeit wiederverwendet werden. Dadurch lassen sich Abweichungen drastisch reduzieren. Der Implementierungsaufwand und der Rechenzeitbedarf in einer numerischen Steuerung sind dazu verhältnismäßig gering.

Eine besonders effektive Realisierung ergibt sich, wenn über einen quaderförmigen Arbeitsraum A ein reguläres, dreidimensionales Gitter gelegt wird. Eine solche Konstellation ist in der Darstellung nach FIG 2 gezeigt, wo die Gitterstruktur G angedeutet ist. Zu jedem Gitterpunkt, dem zu messenden Arbeitspunkt P0...Px, ist die Abweichung zwischen der Sollposition und der gemessenen Position in ein Datenfeld einzutragen. Diese Abweichung kann auch als "räumliche Abweichung" rA am betreffenden Gitterpunkt bezeichnet werden, was in der Darstellung nach FIG 3 veranschaulicht ist. Die räumliche Abweichung rA stellt nichts anderes als den Vektor zwischen der Sollposition X_soll und der Istposition X_ist im gewünschten Arbeitspunkt dar.

Die Ermittlung der Werte für die Kompensationstabelle K kann auch automatisch erfolgen. Dazu kann die Bearbeitungsmaschine über ein Teileprogramm an die gewünschten Stellungen im Arbeitsraum gefahren werden. Nach Erreichen jeder Stellung muss die tatsächliche Stellung aus z.B. einem externen Messmittel ausgelesen und in die Steuerung der Maschine übertragen werden. Dort kann die Abweichung rA ermittelt und zusammen mit der Stellung in die Kompensationstabelle K eingetragen werden.

Bei geeigneter Wahl der Stellungen im Arbeitsraum lässt sich der erforderliche Speicherplatz für die Kompensationstabelle K optimieren. Wird zum Beispiel für jeden Freiheitsgrad (z.B. die Dimensionen X, Y, Z in FIG 1) der Maschine der Verfahrbereich äquiaistant in Abstände Δx unterteilt, so liegen die Messpunkte P0...Px auf einem regulären Gitter. Diesem Zusammenhang liegt die Darstellung nach FIG 1 zugrunde, wo exemplarisch äquidistante Arbeitspunkte P0 bis P16 bezeichnet sind und jeder Arbeitspunkt um Δx in allen Richtungen von benachbarten Arbeitspunkten entfernt ist.

Jede Dimension X, Y und Z wird durch Angabe von Minimal-, Maximalwert und der Anzahl der äquidistanten Intervalle beschrieben. Dieses Vorgehen bietet den weiteren Vorteil, dass die Interpolation der Kompensationswerte in den Zwischenräumen sehr einfach und damit unkritisch hinsichtlich der Laufzeit und des Rechenbedarfs realisiert werden kann.

## Patentansprüche

1. Verfahren zur Kompensation von statischen Positionsfehlern bei der Bewegungsführung eines beweglichen Maschinenelementes einer industriellen Bearbeitungsmaschine wie einer numerisch gesteuerten Werkzeugmaschine, einem Roboter oder dergleichen, mit einer Sollwertvorgabe zur Erzeugung von Führungsgrößen für einen oder mehrere Antriebe zur Steuerung des Maschinenelementes in einem vorgegebenen Arbeitsraum (A) mit folgenden Verfahrensschritten:
- Vorgabe von Sollpositionen (X_soll) für das Maschinenelement für eine vorgegebene Anzahl von verschiedenen Arbeitspunkten (P0...Px) im Arbeitsraum (A),
- Ermittlung von Positionierfehlern (rA0...rAx) durch Vergleichen von jeweiliger Sollposition (X0_soll...Xx_soll) und Istposition (X0_ist...Xx_ist) des Maschinenelementes für jeden dieser Arbeitspunkte (P0...Px),
- Hinterlegung von jeweiliger Sollposition (X0_soll...Xx_soll) und ermitteltem Positionierfehler (rA0...rAx) in einer Kompensationstabelle (K),
- Berücksichtigung der Positionierfehler (rA0...rAx) der Kompensationstabelle (K) als Kompensationswerte durch
- deren Aufschaltung bei der Erzeugung von Führungsgrößen für den oder die Antriebe aus der Sollwertvorgabe in den jeweiligen Sollpositionen (X0_soll...Xx_soll) oder durch
- Interpolation der Kompensationswerte aus der Kompensationstabelle (K) in den Zwischenräumen der jeweiligen Sollpositionen (X0_soll...Xx_soll).

2. Verfahren zur Kompensation von statischen Orientierungsfehlern bei der Bewegungsführung eines beweglichen Maschinenelementes einer industriellen Bearbeitungsmaschine wie einer numerisch gesteuerten Werkzeugmaschine, einem Roboter oder dergleichen, mit einer Sollwertvorgabe zur Erzeugung von Führungsgrößen für einen oder mehrere Antriebe zur Steuerung des Maschinenelementes in einem vorgegebenen Arbeitsraum (A) mit folgenden Verfahrensschritten:
- Vorgabe von Sollorientierungen (O_soll) für das Maschinenelement für eine vorgegebene Anzahl von verschiedenen Arbeitspunkten (P0...Px) im Arbeitsraum (A),
- Ermittlung von Orientierungsfehlern (oA0...oAx) durch Vergleichen von jeweiliger Sollorientierung (O0_soll...Ox_soll) und Istorientierung (O0_ist...Ox_ist) des Maschinenelementes für jeden dieser Arbeitspunkte (P0...Px),
- Hinterlegung von jeweiliger Sollorientierung (O0_soll..,Ox_soll) und ermitteltem Orientierungsfehler (oA0...oAx) in einer Kompensationstabelle (K),
- Berücksichtigung der Orientierungsfehler (oA0...oAx) der Kompensationstabelle (K) als Kompensationswerte durch
- deren Aufschaltung bei der Erzeugung von Führungsgrößen für den oder die Antriebe aus der Sollwertvorgabe in den jeweiligen Sollorientierungen (O0_soll...Ox_soll) oder durch
- Interpolation der Kompensationswerte aus der Kompensationstabelle (K) in den Zwischenräumen der jeweiligen Sollorientierungen (O0_soll...Ox_soll).

3. Verfahren zur Kompensation von statischen Positions- und Orientierungsfehlern nach Anspruch 1 und Anspruch 2, wobei in der Kompensationstabelle (K) die Sollstellungen mit zugeordneten Stellungsfehlern hinterlegt werden, welche die jeweiligen Sollpositionen (X0_soll...Xx_soll) und Sollorientierungen (O0_soll...Ox_soll) sowie die Positionsfehler (rA0...rAx) und Orientierungsfehler (oA0...oAx) beinhalten.

4. Verfahren zur Kompensation von statischen Positions- und/ oder Orientierungsfehlern nach einem der vorangehenden Ansprüche, wobei der Arbeitsraum (A) der Bearbeitungsmaschine quaderförmige Gestalt aufweist und zur Bestimmung von Arbeitspunkten (P0...Px) in eine dreidimensionale Gitterstruktur (G) aufgeteilt ist, wobei zu jedem Gitterpunkt oder einer Auswahl von Gitterpunkten die Abweichung zwischen der Sollstellung (X0_soll...Xx_soll, O0_soll...Ox_soll) und der gemessenen Iststellung (X0_ist...Xx_ist, O0_ist...Ox_ist) in ein Datenfeld der Kompensationstabelle (K) eingespeichert wird.

5. Verfahren zur Kompensation von statischen Positions- und/ oder Orientierungsfehlern nach einem der vorangehenden Ansprüche, wobei die Kompensationstabelle (K) als Datenarray ausgeprägt ist.

6. Verfahren zur Kompensation von statischen Positions- und/ oder Orientierungsfehlern nach einem der vorangehenden Ansprüche, wobei für jeden Freiheitsgrad der Bearbeitungsmaschine der Verfahrbereich des Maschinenelementes äquidistant (Δx) unterteilt wird.

7. Verfahren zur Kompensation von statischen Positions- und/ oder Orientierungsfehlern nach Anspruch 6, wobei jede Dimension des Arbeitsraumes (A) durch den Minimalwert, den Maximalwert und die Anzahl der äquidistanten Intervalle (Δx) beschrieben wird.

8. Verfahren zur Kompensation von statischen Positions- und/ oder Orientierungsfehlern nach einem der vorangehenden Ansprüche, wobei dieses automatisch bei der Inbetriebnahme der Bearbeitungsmaschine durchgeführt wird, indem über ein entsprechendes Teileprogramm mit Verfahranweisungen für die Sollwertvorgabe die gewünschten Stellungen im Arbeitsraum (A) angefahren werden und nach Erreichen der jeweiligen Stellung die tatsächlichen Iststellungen gemessen und in die Steuerung der Maschine übertragen werden, wo die Abweichungen in Form von Positionsfehlern (rA0...rAx) und/oder Orientierungsfehlern (oA0...oAx) ermittelt und mit den zugehörigen Stellungen in die Kompensationstabelle (K) eingetragen werden.
